# EUROPEAN PATENT SPECIFICATION

(11) **EP 3 519 347 B1**
(45) Date of publication and mention of the grant of the patent: **08.03.2023**
(21) Application number: 17870537.2
(22) Date of filing: 23.10.2017
(51) Int. Cl.: B67D 1/08, F25D 31/00, A23L 2/42, A23G 9/04

(54) **METHOD FOR PRODUCING A SOLID GRANULAR FROZEN MASS OF ALCOHOLIC AND NON-ALCOHOLIC BEVERAGES AND A DEVICE FOR EMBODIMENT OF THE METHOD**
VERFAHREN ZUR HERSTELLUNG EINER FESTEN KÖRNIGEN GEFRORENEN MASSE AUS ALKOHOLISCHEN UND NICHTALKOHOLISCHEN GETRÄNKEN UND VORRICHTUNG ZUR AUSFÜHRUNG DES VERFAHRENS
PROCÉDÉ DE PRODUCTION D'UNE MASSE CONGELÉE GRANULAIRE SOLIDE DE BOISSONS ALCOOLISÉES ET NON ALCOOLISÉES ET DISPOSITIF DE MISE EN OEUVRE DU PROCÉDÉ

(30) Priority: 08.11.2016 CZ 20160695
(43) Date of publication of application: 07.08.2019
(73) Proprietor: Matejícek, Bretislav, 588 13 Polná (CZ)
(72) Inventor: Matejícek, Bretislav, 588 13 Polná (CZ)
(74) Representative: Jeck, Anton
(86) International application number: PCT/CZ2017/000065
(87) International publication number: WO 2018/086637

(56) References cited:
- EP-A1- 1 627 849
- EP-B1- 2 207 459
- EP-B1- 2 207 459
- WO-A2-2006/027764
- GB-A- 2 486 863
- JP-A- H09 128 642
- JP-A- H09 128 642
- US-A1- 2005 097 913

## Description

### Field of the invention

The present invention relates to a method for producing a solid granular frozen mass of alcoholic and non-alcoholic beverages, wherein the beverages are frozen into a granular mass which is conveyed into the glass through the tap. The invention also relates to a device for embodiment of the method.

### Background of the invention

To cool alcoholic and non-alcoholic beverages poured into a glass ice cubes are added/ which maintain the lower temperature of the beverage during their dissolution. This known cooling procedure is used also with fruit beer. Adding ice cubes to a beverage, however, thins it partially, thus degrading the quality and concentration of beverages. Ice cubes are not added to either tap or bottled classical beer, because this would degrade its quality and taste entirely.

### Object of the invention

The aforementioned disadvantages of known methods of cooling alcoholic and non-alcoholic beverages are removed by the method of producing a consistent granular frozen mass of alcoholic and non-alcoholic beverages according to the invention. The object of the invention is that the beverage under a pressure of 1*10⁵ Pa to 3*10⁵ Pa (1 to 3 bars) is fed into the inner tube of the freezing double-shell exchanger, cold freezing glycol with a temperature of -12 to -16 °C flowing in the outer tube of the double-shell exchanger acts on this inner tube of the double-shell exchanger with introduced beverage for 8-16 min; until the beverage is frozen inside the inner tube. Then the action of the cold freezing glycol on the inner tube of the double-skin exchanger is stopped. Subsequently, hot defrosting glycol with temperature of +20 to +40 °C is fed into the outer tube of the double-shell exchanger, and its action will release the frozen beverage from the wall of the inner tube of the double-shell exchanger after 10 - 30 seconds. The release of the frozen beverage from the inner tube of the double-shell exchanger is followed by breaking the frozen beverage into the granular frozen material.

The apparatus for embodiment of the method consists of a technological line, the individual parts of which are interconnected and consisting of a beverage container to which a double-shell exchanger is connected, this double-shell exchanger consists of an inner tube in which the beverage is frozen and an outer tube into which the cold freezing glycol or hot defrosting glycol is fed. On the side of the beverage outlet to the inner tube, an inlet shut-off element for the cold freezing glycol output and an inlet shut-off element for hot defrosting glycol output is connected to the outer tube of the double-shell exchanger. On the side of the frozen beverage outlet from the inner tube, an inlet shut-off element of cold freezing glycol and an inlet shut-off element of hot defrosting glycol are connected to the outer tube of the double-shell exchanger. A condensation unit is also in the technological line, which is connected to a second cold freezing glycol tank and to a third hot defrosting glycol tank. On the outer tube of the double-shell exchanger, a third sensor is located which is connected to a regulator which controls the freezing temperature of the beverage and a fourth sensor, connected to a regulator which controls the defrosting temperature of the beverage inside the inner tube.

The advantage of the invention is that the prepared beverage, alcoholic or nonalcoholic, is supplied in a consistent frozen granular form. After the granules are dissolved, the resulting beverage is 100% of its original concentration, the quality and flavor of the beverage are retained, while the gradual dissolution of the granules ensures a low temperature of the beverage throughout its consumption.

WO 2006 / 027764 A2 discloses a beverage forming apparatus for producing a granular frozen mass of beverages comprising a container to contain a beverage, a cooling medium to cool said beverage, a detaching device to scrape frozen particles of said beverage from an inner surface of said container and a motor to provide relative motion between said container and detaching device.

JP H09 128642 A teaches a beverage cooling device with a discharge number detecting means judging whether or not continuous discharge was executed and a clock for measuring a defrosting start time of the ice bank. Here, a setting means inputs discharge times for detecting a continuous discharge state, the time B for defrosting the ice bank and the set value of water temp. for judging the completion of the defrosting in the ice bank.

From EP 2 207 459 B1 a system for providing an iced alcoholic beverage such as iced beer or the like or iced carbonated soft drink is known, comprising a source of chilled coolant, a beverage line for supplying the beverage, a heat exchanger disposed in the beverage line, for cooling the beverage by heat transfer to the chilled coolant, a restriction or orifice forming a venturi in the, beverage line downstream from the heat exchanger, a chilled or chillable font for further cooling the, beverage downstream from the orifice, and a dispenser tap typically adjacent or part of the font, capable of dispensing the beverage at a relatively low dispense rate and at a relatively higher dispense rate.

### Summary of figures in drawings

The invention is described in detail in the accompanying drawings, which schematically illustrate the technological line to produce frozen granules and their output through taps.

### Description of embodiments

The exemplary embodiments described below are for illustration only, not limiting the possible embodiments of the invention to the examples herein.

### Example 1

Production of a consistent frozen granular mass from a non-alcoholic beverage and feeding of this granular mass, e.g. juices and various kinds of lemonades and other non-alcoholic beverages, into the tap.

This example further illustrates the formation of a consistent granular frozen mass (frozen granules) from non-alcoholic beverages, wherein the frozen granules are introduced into the tap of the tapping device where they are added to the beverage.

The non-alcoholic beverage from the container 4 under pressure of 1*10⁵ Pa to 3*10⁵ Pa (1 to 3 bars) is fed through tubing into the cooling coil 18 and coil 19 for pre-cooling of the beverage. Both coils 18 and 19 in the first tank 1 are cooled by glycol with temperature of +1 to +4°C. The glycol temperature inside the first tank 1 is monitored by the first sensor 22 of the first controller (controller description see example 4). In the cooling coil 18 made as beverage cooler, the beverage cools to a temperature of about +4 to +8°C and is prepared here for the subsequent output to the tap 16, as soon as the frozen granules output from the tap 15 are ready.

In the coil 19, which acts as a pre-cooler, the glycol also pre-cools the beverage to a temperature of about +4 to +8°C to accelerate the subsequent freezing of the beverage. The pre-cooled beverage from coil 19 is fed under pressure of about 1*10⁵ Pa to 3*10⁵ Pa (1 - 3 bars) into the inner tube 20.1 of the double-shell exchanger 20 where the beverage is frozen.

After feeding the beverage into the inner tube 20.1 , cold glycol is fed into the outer tube 20.2 of the double-shell exchanger 20 and the glycol temperature is monitored by second sensor 26 and set by the second controller. The second controller also controls the operation of the condenser unit 5 according to the required temperature of glycol in the second tank 2.

The second controller sets the required temperature for freezing of the beverage fed into the inner tube 20.1 of the double-shell exchanger 20, which is -12°C for nonalcoholic beverage.

For one cycle of beverage freezing, about 0.5 liters of beverage will fit into the inner tube 20.1 to form five to six batches of frozen granules. After filling the inner tube 20.1 the cold freezing glycol inlet shut-off valve H and outlet shut-off valve 12 open and the pump 6 starts, which transports the cold freezing glycol with set temperature -12°C from the second tank 2 into the outer tube 20.2 of the exchanger 20. This cold glycol circulates in the outer tube 20.2 for approx. 8 min., until the beverage in the inner tube 20.1 freezes. The freezing end temperature is sensed by the third sensor 23 of the third controller, where the switch-off temperature is set to -10 ° C for a non-alcoholic beverage.

After freezing the beverage within the inner tube 20.1 , the inlet shut-off valve H and the outlet valve 12 of the cold-freezing glycol are closed. Now the process of releasing the frozen beverage from the inner tube wall 20.1 begins. The inlet shut-off valve 13 and the outlet shut-off valve 14 of hot glycol open, and hot defrosting glycol with temperature +20 to +40°C is fed into the outer tube 20.2 of the double-shell exchanger 20 from the third tank 3 through the third pump 7.

The glycol in the third tank 3 is heated by the hot steam from the condenser unit 5 through the small exchanger 25 built into the third tank 3. The glycol temperature in the third tank 3 is monitored with the fifth sensor 27 of the fifth controller.

After about 20 seconds, the hot defrosting glycol will release the frozen beverage from the walls of the inner tube 20.1 of the double-shell exchanger 20. The end defrosting temperature is set to +4°C and is monitored by the fourth sensor 24 of the fourth controller. The released frozen beverage is pushed by the pressure of 1*10⁵ Pa to 3*10⁵ Pa (1-3 bars) in the container 4, through the piping in the direction of the tap 15, from which the frozen granules are discharged. Along the way to the tap 15, the frozen beverage-granules proceed through piping that is arranged to form 90° angles where the frozen beverage breaks and creates the frozen granules. During the final pour of the beverage, from the frozen granules tap 15 approx. 0.1 I of frozen granules are poured and the cooled beverage added from tap 16, which, as mentioned above, is fed to the tap 16 from the cooling coil 18. This process can be also reversed, when first the cooled beverage is poured from tap 16 and subsequently the frozen granules are added to the beverage from tap 15. The temperatures of glycol required for pre-cooling, freezing and release of the frozen beverage from the wall of the inner tube 20.1 are provided by the condenser unit 5.

### Example 2

Producing consistent frozen granular mass from an alcoholic beverage with alcohol contents up to 5%. The procedure for production of frozen granules from alcoholic beverages with alcohol contents up to 5% is identical with example 1 ; only the temperature of freezing glycol is lowered to -14°C and the end freezing temperature to - 12°C. These temperatures also apply for all kinds of beer and cider.

### Example 3

The procedure for production of frozen granules from alcoholic beverages with alcohol contents up to 10% is identical with example 1 ; only the temperature of freezing glycol is lowered to -16°C and the end freezing temperature to -14°C. These temperatures also apply for all kinds of white wine and sparkling wine.

### Example 4

### Device.

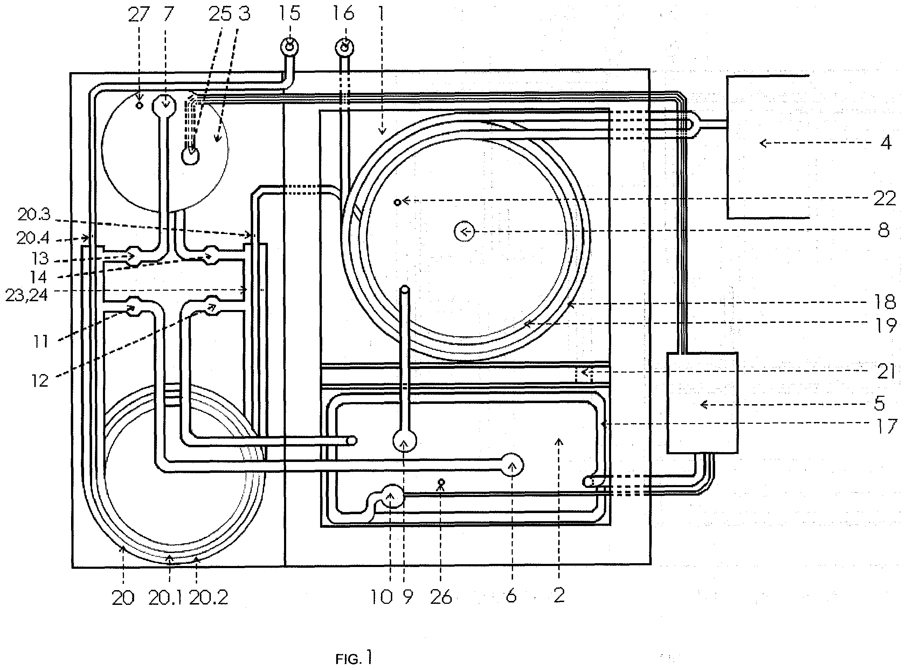

The device for the production of frozen granules according to the preceding examples consists of a technological line, the main parts of which are interconnected with the food-compatible piping. These main parts include beverage container 4, containing the beverage for freezing and consumption, first tank 1 with glycol of temperature +1 to +4 °C and cooling coils 18 and 19, second tank 2 with freezing glycol of temperature -12 to -16 °C, double-shell exchanger 20, in which the freezing of the beverage takes place, third tank 3 with beverage defrosting glycol of temperature +20 to +40 °C, condenser unit 5_output taps 15 and 16 for pouring the frozen granules and the cold beverage. The technological line also includes the distributor cabinet with the control electronics including all the controllers that control the glycol temperature inside individual tanks. The controllers are designated as first to fifth in the text as described below. The distributor cabinet and the first to fifth controllers are not illustrated in the figure.

To the beverage container 4 which can be for example a stainless steel vessel, a cooling coil 8 for cooling of the beverage and coil 19 for pre-cooling of beverage are connected through piping. Both coils 18 and 19 are placed in the first tank 1 which is filled with glycol cooled to temperature of +1 to +4 °C. To the cooling coil 18 is connected the tap 16 for pouring of the cooled beverage. The first tank T also contains the mixer 8 for mixing of glycol and the first sensor 22 of the first controller that controls the temperature in tank To the first tank 1, the transfer pump 9 is connected, which siphons out the glycol from the second tank 2, while pump 9 is controlled by the first controller.

To the coil 19 the double-shell exchanger 20 is connected. The double-shell exchanger 20 consists of the inner tube 20.1 where freezing of the beverage takes place and of the outer tube 20.2, into which the cold freezing glycol or hot defrosting glycol is fed. The outer tube 20.2 is copper and the outflow is brass. The inner tube 20.1 is plastic food tubing with length of approx. 5 m and 10 mm diameter. The double-shell exchanger 20 is connected to the second tank 2, filled with cold freezing glycol with temperature -12 to -16 °C. In the second tank 2, the second sensor 26 of the second controller and the pump 6 are located. The second controller controls the temperature of the cold freezing glycol for its entry into the outer tube 20.2 of the double-shell exchanger 20. The outer tube 20.2 of the double-shell exchanger 20 is on its first side 20.4, i.e. on the side where the frozen beverage enters the inner tube 20.1 , fitted with the inlet shut-off valve H of the cold freezing glycol and the inlet shut-off valve 13 of the hot defrosting glycol. The outer tube 20.2 of the double-shell exchanger 20 is on its second side 20.3, i.e. on the side, where the pre-cooled beverage enters the inner tube 20.1 from the coil 19, fitted with the outlet shut-off valve 12 of the cold freezing glycol and the outlet shut-off valve 14 of the hot defrosting glycol. To the second tank 2, the condenser unit 5 is connected which ensures cooling of the cold freezing glycol in the second tank 2 through the evaporator 17 located in the second tank 2. The evaporator 17 is made of a copper tube with 12 mm diameter. The injection of the liquid coolant into the evaporator 17 is controlled by the thermostatic expansion valve 10. The second pump 6 pumps the cold freezing glycol with temperature -12 to -16 °C through the inlet shut-off valve 11 to the outer tube 20.2 of the exchanger 20.

For monitoring the freezing and defrosting temperatures of the beverage inside the inner tube 20.1 , on the outer tube 20.2 on the side of the outlet shut-off valves 12 and 14 there are the third sensor 23 and the fourth sensor 24 connected. The third sensor 23 is part of the third controller that controls freezing of the beverage inside the inner tube 20.1. The fourth sensor 24 is part of the fourth controller that controls defrosting of the beverage inside the inner tube 20.1. The inlet shut-off valve 13 and the outlet shut-off valve 14 are connected to the third tank 3. The third tank 3 stores the defrosting glycol with temperature +20 to +40 °C (i.e. glycol for releasing the frozen beverage from the wall of the inner tube 20.1). The third tank 3 is connected to the condenser unit 5 through piping. Glycol in the third tank 3 is heated by the condensation heat from the condenser unit 5 through the small exchanger 25. To the third tank 3 also the third pump 7 and the fifth sensor 27 of the fifth controller are connected. The third pump 7 supplies the hot defrosting glycol to the outer tube 20.2 of the double-shell exchanger 20. The fifth sensor 27 of the fifth controller monitors the glycol temperature in the third tank 3. The fifth controller controls the temperature in tank 3. The tap 15 of frozen granules is connected to the outlet 20.4 of the double-shell exchanger 20. Between the first tank 1 and second tank 2 there is the level overflow 21 which returns glycol from the first tank to the second tank 2. The first tank 1 and the second tank 2 are level-type, the third 3 is a pressure-less closed tank.

### Example 5

### Device.

The device as described in Example 4, but the tank with glycol of temperature +1 to +4 °C is removed from the technological line. The beverage is fed from the container 4 directly without pre-cooling into the inner tube 20.1 of the double-shell exchanger 20 and to the tap 16. Removing tank with coils 18 and 19 will extend the time necessary for freezing the beverage in the inner tube 20.1 of the double-shell exchanger 20 by approx. 5 to 10 min.

### Example 6

### Device.

The device as described in Example 4, but the tank 1 with glycol of temperature +1 to +4 °C is removed from the technological line. The beverage in container 4 is pre-cooled to +4 to +8 °C. Removing tank 1 and pre-cooling the beverage in container 4 does not extend the time for granule production and is identical to Example 4

The devices described in Examples 4, 5 and 6 with one double-shell exchanger can provide five to six batches of frozen granules in one freezing cycle of 0.5 liters of beverage. For larger scale operation and requirements for more powerful device, two and more double-shell exchangers 20 can be installed in parallel together with doubling or multiplying the output of the condenser unit 5, exchanger 17, cooling and pre-cooling coils 18 and 19.

### List of reference signs

1 first glycol tank with temperature +1 to +4 °C
2 second glycol tank with temperature -12 to -16 °C
3 third glycol tank with temperature +20 to +40 °C
4 beverage container
5 condenser unit (cooling unit)
6 second glycol pump
7 third glycol pump
8 mixer
9 transfer pump
10 expansion valve
11 inlet shut-off valve of the cold freezing glycol
12 outlet shut-off valve of the cold freezing glycol
13 inlet shut-off valve of the hot defrosting glycol
14 outlet shut-off valve of the hot defrosting glycol
15 tap for frozen granules
16 tap for cooled beverage
17 evaporator
18 cooling coil for cooling of beverage
9 coil for pre-cooling of beverage
20 double-shell exchanger
20.1 inner tube of the double-shell exchanger
20.2 outer tube of the double-shell exchanger
20.3 inlet of beverage into the inner tube of the exchanger
20.4 outlet of frozen beverage from the inner tube of the exchanger
21 level overflow
22 the first sensor of the first controller controls the temperature of tank 1
23 the third sensor of the third controller controls the temperature of end of freezing
24 the fourth sensor of the fourth controller controls the temperature of end of defrosting
25 small exchanger
26 the second sensor of the second controller controls the temperature of tank 2
27 the fifth sensor of the fifth controller controls the temperature of tank 3.

## Claims

1. Method of producing a consistent granular frozen mass of alcoholic and nonalcoholic beverages **characterized in that** the beverage under pressure of 1*10⁵ Pa to 3*10⁵ Pa (1 to 3 bars) is fed into the inner tube (20.1) of the freezing double-shell exchanger (20), on this inner tube (20.1) of the double-shell exchanger (20) with beverage, the cold freezing glycol with temperature -12 to -16 °C circulating in the outer tube (20.2) of exchanger (20) acts for 8 - 16 min., until the beverage inside the inner tube (20.1) freezes, subsequently the action of the cold freezing glycol on the inner tube (20.1) of the exchanger (20) is stopped, subsequently the hot defrosting glycol with temperature +20 to +40 °C is fed into the outer tube (20.2) of the double-shell exchanger (20), its action will release the frozen beverage from the wall of the inner tube (20.1) of the double-shell exchanger (20) after 10 - 30 seconds, after the release of the frozen beverage from the inner tube (20.1) of the double-shell exchanger (20) the frozen beverage is broken into the granulated frozen mass.

2. The device for embodiment of the method according to Claim 1,
**characterized in**
**that** it consists of the following:
- a technological line with interconnected individual components, which consists of the following:
∘ a beverage container (4),
∘ a double-shell exchanger (20) which is connected to the beverage container (4),
▪ the double-shell exchanger (20) consists
• of an inner tube (20.1) in which the freezing of the beverage takes place and
• an outer tube (20.2), into which the cold freezing glycol or the hot defrosting glycol is fed, on the beverage inlet side (20.3) of the inner tube (20.1),
∘ two cooling coils (18 ,19) within a first tank (1) for pre-cooling of the beverage, being connected to the container (4) via tubing, the coils are adapted to be cooled by glycol within the tank
▪ a first sensor (22) of a first controller is provided for monitoring the glycol temperature within the first tank (1)
∘ the first cooling coil (18) is connected to a first tap (16) and the second cooling coil (19) is connected to a second tap (15),
∘ the second cooling coil (19) is provided as a precooler and is further connected to the inner tube (20.1)
∘ to the outer tube (20.2) of the exchanger (20) there is an outlet shut-off element (14) connected for the output of the hot defrosting glycol and an outlet shut-off element (2) for the output of the cold freezing glycol,
▪ the glycol temperature is monitored by a second sensor 26 and set by a second controller
▪ the second controller also controls the operation of the condenser unit (5) and sets the required temperature in a second tank (2), comprising the cold freezing glycol for freezing of the beverage fed into the inner tube 20.1
∘ on the side of the outlet (20.4) of the frozen beverage from the inner tube (20.1), to the outer tube (20.2) of the double-shell exchanger (20) there is an inlet shut-off element (11) of the cold freezing glycol and the inlet shut-off element (13) of the hot defrosting glycol connected,
∘ a condenser unit (5) which is connected to
∘ a third tank (3) with the hot defrosting glycol, feedable into the outer tube (20.2) of the double-shell exchanger (20) on the side of the outlet shut-off elements (12 14) via a further pump (7)
∘ the third tank (3) is adapted to provide the heated glycol by hot steam from the condenser unit (5) through an exchanger (25) built into the third tank (3), wherein the glycol temperature in the third tank (3) is monitored with a fifth sensor 27 of a fifth controller.
∘ a third sensor (23) connected with
∘ a third controller (5) the controls temperature for freezing of the beverage, thus the freezing end temperature,
∘ the third controller (5) sets the required temperature for freezing of the beverage sensed by a third sensor (23) and fed into the inner tube (20.1) of the double-shell exchanger (20)
∘ a pump (6) for transporting the glycol from the second tank (2) into the outer tube (20.2) of the exchanger (20) is provided
∘ a fourth sensor (24) connected with a regulator which controls the defrosting temperature of the beverage inside the inner tube and further connected with
∘ a fourth controller that controls the temperature for defrosting of the beverage inside the inner tube (20.1).

## Patentansprüche

1. Verfahren zur Herstellung einer einheitlichen körnigen gefrorenen Masse von alkoholischen und nichtalkoholischen Getränken **dadurch gekennzeichnet, dass** das Getränk unter Druck von 1*10⁵ Pa bis 3*10⁵ Pa (1 bis 3 bar) in das Innenrohr (20.1) eines Gefrier-Doppelmanteltauschers (20) eingespeist wird, über dieses Innenrohr (20.1) des Doppelmanteltauschers (20) mit Getränk das kalte Gefrierglykol mit Temperatur - 12 bis -16 °C, welches im äußeren Rohr (20.2) des Austauschers (20) zirkuliert, für 8 - 16 min. wirkt, bis das Getränk im inneren Rohr (20.1) gefriert, anschließend wird die Wirkung des kalten Gefrierglykol auf das innere des Rohrs (20.1) des Wärmetauschers (20) gestoppt, anschließend wird heißes Abtauglykol mit einer Temperatur von +20 bis +40 °C in das Außenrohr (20.2) des Doppelmanteltauschers (20) geleitet, dessen Wirkung das gefrorene Getränk von der Wand des Innenrohrs (20.1) des Doppelmanteltauschers (20) nach 10 - 30 Sekunden freisetzt, nach der Freigabe des gefrorenen Getränks aus dem Innenrohr (20.1) des Doppelmanteltauschers (20 ) wird das gefrorene Getränk in die granulierte gefrorene Masse gebrochen.

2. Vorrichtung zur Ausgestaltung des Verfahrens nach Anspruch 1,
**dadurch gekennzeichnet**
**dass** es die folgenden Bestandteile aufweist:
- eine technologische Linie mit miteinander verbundenen Einzelkomponenten, aufweisend:
∘ einen Getränkebehälter (4),
∘ ein Doppelmanteltauscher (20), welcher an den Getränkebehälter (4) angeschlossen ist,
▪ der Doppelmanteltauscher (20) besteht aus
• einem Innenrohr (20.1), in dem das Gefrieren des Getränks stattfindet und
• einem äußeren Rohr (20.2), in das das kalte Gefrierglykol oder das heiße Abtauglykol, auf der Getränkeeinlassseite (20.3) des inneren Rohres (20.1), eingespeist wird
∘ zwei Kühlschlangen (18, 19) in einem ersten Tank (1) zur Vorkühlung des Getränks, die über Schläuche mit dem Behälter (4) verbunden sind, wobei die Schlangen durch Glykol im Tank gekühlt werden
▪ ein erster Sensor (22) einer ersten Steuerung zur Überwachung der Glykoltemperatur im ersten Tank (1)
∘ die erste Kühlschlange (18) ist mit einem ersten Hahn (16) und die zweite Kühlschlange (19) mit einem zweiten Hahn (15) verbunden,
∘ die zweite Kühlschlange (19) ist als Vorkühler vorgesehen und mit dem Innenrohr (20.1) verbunden
∘ an das äußere Rohr (20.2) des Tauschers (20) ist ein Auslass-Absperrelement (14) für den Ausgang des heißen Abtau-Glykols und ein Auslass-Absperrelement (2) für den Ausgang des kalten Gefrierens angeschlossen Glykol,
▪ die Glykoltemperatur wird von einem zweiten Sensor 26 überwacht und von einem zweiten Regler eingestellt
▪ der zweite Controller steuert auch den Betrieb der Kondensatoreinheit (5) und stellt die erforderliche Temperatur in einem zweiten Tank (2) ein, der das kalte Gefrierglykol für den Ausgang des kalten Gefrierens enthält, das in das Innenrohr 20.1 eingefüllt wird
∘ auf der Seite des Auslasses (20.4) des gefrorenen Getränks aus dem Innenrohr (20.1), ist an dem Außenrohr (20.2) des Doppelmanteltauschers (20) ein Einlass-Absperrelement (11) für das kalte Gefrierglykol und das Zulauf-Absperrorgan (13) des heißen entfrostenden Glykols angeschlossen,
∘ eine Kondensatoreinheit (5), die angeschlossen ist an
∘ ein drittem Behälter (3) mit heißem Abtauglykol, der über eine weitere Pumpe (7) in das Außenrohr (20.2) des Doppelmanteltauschers (20) auf der Seite der Austritts-Absperrorgane (12 14) einspeisbar ist
∘ der dritte Tank (3) so ausgelegt ist, dass er das erhitzte Glykol durch Heißdampf aus der Kondensatoreinheit (5) über einen in den dritten Tank (3) eingebauten Austauscher (25) bereitstellt, wobei die Glykoltemperatur in dem dritten Tank (3) mit einem fünften Sensor (27) eines fünften Controllers überwacht wird,
∘ einem dritten Sensor (23) verbunden mit
∘ einer dritten Steuerung (5), die die Temperatur zum Gefrieren des Getränks steuert, also die Gefrierendtemperatur,
∘ einer dritten Steuerung (5), die die Temperatur zum Gefrieren des Getränks steuert, also die Temperatur zum Gefrieren des Getränks, die von einem dritten Sensor (23) erfasst und in das Innenrohr (20.1) des Doppelmanteltauschers (20) geleitet wird
∘ dass eine Pumpe (6) für den Transport des Glykols aus dem zweiten Tank (2) in das äußere Rohr (20.2) des Wärmetauschers (20) vorgesehen ist und
∘ ein vierter Sensor (24), der mit einem Regler versehen ist, der die Auftautemperatur des Getränks im Inneren des Rohrs steuert, und der außerdem verbunden ist mit
∘ einer vierten Steuerung, die die Temperatur zum Auftauen des Getränks innerhalb des Innenrohrs (20.1) steuert.

## Revendications

1. Procédé pour la fabrication d'une masse unifiée granulaire gelée de boissons alcooliques et non alcooliques est caractérisé de sorte que la boisson est introduite sous la pression de 1*10⁵Pabis 3*10⁵Pa (1 jusqu'à 3 barres) dans le tube intérieur (20.1) d'un échangeur de manteau double congélateur (20) via ce tube intérieur (20.1) de l'échangeur du manteau double (20) avec la boisson le glycol froid congélateur avec une température de - 12 jusqu'à -16 °C circulant dans le tube externe (20.2) de l'échangeur (20) et agissant en 8-16 minutes jusqu'à ce que la boisson gèle dans le tube interne (20.1), par la suite l'effet du glycol froid congélateur est stoppé au niveau du tube interne (20.1) de l'échangeur de la chaleur (20), par la suite du glycol dégelé chaud est introduit avec une température de +20 jusqu'à +40 °C dans le tube externe (20.2) de l'échangeur du manteau double (20) dont l'effet dégage la boisson gelée de la paroi du tube interne (20.1) de l'échangeur du manteau double (20) après 10-30 secondes et après la libération de la boisson gelée du tube interne (20.1) de l'échangeur du manteau double (20) la boisson gelée est brisée dans la masse granulaire gelée.

2. Dispositif pour la conception du procédé selon la revendication 1 est caractérisé de sorte qu'il présente les composants qui suivent :
- Une ligne technologique de composants individuels présentant:
• Un récipient à boisson (4),
• Un échangeur de manteau double (20) raccordé au récipient de boisson (4),
∘ L'échangeur du manteau double (20) se compose d'
∘ Un Tube interne (20.1) où la congélation de la boisson se produise.
∘ Un tube externe (20.2) où le glycol froid congélateur ou le glycol chaud dégivré sont introduits au niveau du côté d'entrée des boissons (20.3) du tube interne (20.1).
∘ Deux serpentins de refroidissement (18, 19) dans le premier réservoir (1) pour le pré-refroidissement des boissons qui sont reliées via des tuyaux avec le récipient (4) où les serpents sont refroidis par le biais du glycol au niveau du réservoir.
∘ Un premier capteur (22) d'un premier contrôle pour la surveillance de la température du glycol au niveau du premier réservoir (1).
∘ Le premier serpentin de refroidissement (18) est relié au premier robinet (16) et le deuxième serpentin de refroidissement (19) est relié au deuxième robinet (15),
∘ Le deuxième serpentin de refroidissement (19) est prévu en tant que prérefroidisseur et est relié au tube interne (20.1).
∘ Au tube externe (20.2) de l'échangeur (20) est un élément d'arrêt d'échappement (14) pour la sortie du glycol chaud dégivré et un élément d'arrêt d'échappement (2) pour la sortie du glycol raccordé au gel froid.
∘ La température du glycol est surveillée par un deuxième capteur 26 et est réglée par un deuxième régulateur.
∘ Le deuxième contrôleur commande aussi le fonctionnement de l'unité de condensation (5) et règle la température nécessaire dans un deuxième réservoir (2) contenant le glycol froid congélateur pour le dégagement du gel froid qui est introduit dans le tube interne (20.1).
∘ Sur le côté de la sortie (20.4) de la boisson gelée du tube interne (20.1) un élément d'entrée (11) est raccordé à un tube externe (20.2) de l'échangeur du manteau double (20) pour le glycol froid congélateur et l'obturateur d'entrée (13) du glycol chaud dégivré.
∘ Une unité de condensation (5) est raccordée à un troisième récipient (3) avec du glycol chaud dégivré qui est introduit via une pompe supplémentaire (7) dans le tube externe (20.2) de l'échangeur de la chaleur (20) sur le côté des dispositifs d'arrêt de fuite (14).
∘ Le troisième réservoir (3) est conçu de tel que le glycol chauffé est mis en place par le biais de la vapeur surchauffée de l'unité de condensation (5) via un échangeur (25) intégré dans un troisième réservoir (3) où la température du glycol est surveillé au niveau du troisième réservoir (3) avec un cinquième capteur (27) d'un cinquième contrôleur.
∘ Un troisième capteur (23) est relié à une troisième commande (5) qui contrôle la température de la congélation de la boisson, donc la température de la congélation.
∘ D'une troisième commande (5) qui contrôle la température de la congélation de la boisson, donc la température de la congélation, qui est enregistrée par le biais d'un troisième capteur (23) et qui est dirigée vers l'intérieur du tube interne (20.1) de l'échangeur de la chaleur (20).
∘ Qu'une pompe (6) est prévue pour l'acheminement du glycol du deuxième réservoir (2) en direction du tube externe (20.2) de l'échangeur de chaleur (20) qui fonctionne par un régulateur qui contrôle la température de dégivrage de la boisson dans le tube interne et qui est relié par ailleurs à une quatrième commande qui contrôle la température de dégivrage de la boisson à l'intérieur du tube interne (20.1).
